# EUROPEAN PATENT SPECIFICATION

(11) **EP 4 177 170 B1**
(45) Date of publication and mention of the grant of the patent: **04.06.2025**
(21) Application number: 22200688.4
(22) Date of filing: 10.10.2022
(51) Int. Cl.: B64F 5/50

(54) **SYSTEMS AND METHODS FOR SUPPORTING A WORKPIECE IN A MANUFACTURING ENVIRONMENT**
SYSTEME UND VERFAHREN ZUR UNTERSTÜTZUNG EINES WERKSTÜCKS IN EINER FERTIGUNGSUMGEBUNG
SYSTÈMES ET PROCÉDÉS DE SUPPORT D'UNE PIÈCE DANS UN ENVIRONNEMENT DE FABRICATION

(30) Priority: 03.11.2021 US 202163275005 P; 19.11.2021 NL 2029840
(43) Date of publication of application: 10.05.2023
(73) Proprietor: The Boeing Company, Arlington, VA 22202 (US)
(72) Inventor: Moore, Matthew B., HUNTINGTON BEACH, 92647 (US); Stone, Patrick B., HUNTINGTON BEACH, 92647 (US)
(74) Representative: Arnold & Siedsma

(56) References cited:
- WO-A2-03/037564
- CN-A- 110 239 741
- CN-U- 206 579 860
- DE-A1- 102013 006 506
- US-A1- 2010 011 563
- US-A1- 2010 038 024
- US-B2- 9 132 924

## Description

### Field

This application relates to the manufacturing of structures and, more specifically, to methods and systems for supporting aerospace structures during manufacturing.

### Background

Manufacturing of large structures in the aerospace industry typically requires manual processing, manually placing the structure into a workstation, and manually moving it out of the workstation

Challenges arise related to proper orientation and support of large structures within a work cell, specifically in work cells utilizing overhead mechanical equipment. Other difficulties arise related to movement of large structures into and out of work cells, and more particularly to automated transfer of large structures.

Accordingly, those skilled in the art continue with research and development efforts in the field of manufacturing large aerospace structures.

US2010/0011563 states, in its abstract: A flexible fastening machine tool having first and second facing pedestals is mounted on first and second pairs of rails. The pedestals are movable along the rails in a Y-axis direction. A rail base is provided and the second pair of rails is mounted on the rail base. A third pair of rails that extend in an X-axis direction are mounted to the floor, and the rail base is positioned on the third pair of rails, such that the second pedestal is movable along the third pair of rails in the X-axis direction toward and away from the first pedestal. A first movable carriage is mounted on the first pedestal and a second movable carriage is mounted on the second pedestal. A frame member is supported by the first and second carriages and the frame member holds a workpiece. The first and second carriages are independently movable toward and away from the first and second pairs of rails such that the fixture frame is capable of being raised, lowered and tilted. A C-frame is mounted on the third pair of rails and the C-frame is capable of performing tooling operations on the workpiece.

DE 10 2013 006506 states in its abstract: The invention relates to a processing system for aircraft structural components with a processing station (1) which has a positioning device (2) for receiving and moving an aircraft structural component (3a, b) and a manipulator (4) with a tool (5), preferably a riveting machine (5a). , wherein the manipulator (4) is set up to move the tool (5), a working area (6) of the processing station (1) being defined by that area in which the aircraft structural component (3a, b) can be processed by the tool (5). The invention is characterized in that the processing system comprises a loading area (7) spaced apart from the work area (6) for loading and/or unloading the aircraft structural component (3a, b) and that the processing system comprises a traversing device (9) which is set up to to move the aircraft structural component (3a, b) picked up by the positioning device (2), in particular completely, between the working area (6) and the loading area (8). The invention also relates to a method for machining aircraft structural components.

WO03/037564 states in its abstract: A production system for manufacturing a workpiece comprises an index system including a plurality of index devices removably mounted on the workpiece at known longitudinally spaced locations therealong, and a longitudinally extending index member releasably engaged with at least two of the index devices such that a position and orientation of the index are fixed relative to the workpiece by the index devices, the index member having position-indicating features distributed therealong. The production system further comprises a machine module mounted for longitudinal movement along the index member and operable to perform an operation, the machine module being operable to detect the position-indicating features on the index member and thereby determine a position of the machine module relative to the workpiece.

US9 132 924 states in its abstract: A device for spatially aligning at least two large-format subassembly components, particularly at least one side shell, at least one upper shell, at least one lower shell and/or at least one floor structure, relative to each other for integrating a component, particularly a fuselage section of an aircraft, is provided which includes at least two positioning devices for taking up in each case a subassembly component, particularly at least two side shell positioners, at least one upper shell positioner and/or at least one lower shell positioner, at least one measuring device for acquiring a multitude of measured data, particularly of positioning data relating to the subassembly components and/or to the positioning devices, at least one control and/or regulating device, particularly at least one CNC control system, and at least one neuronal network. Moreover, a method for aligning the subassembly components is also provided.

US2010/038024 states in its abstract: Until now, an orientation pattern has been projected onto the skin by means of lasers. The stringers provided with an adhesive film are then positioned by hand on the skin and fixed by pressure weights. A precision of ±3 mm is thus achieved. The fine positioning takes place by means of comb templates. The templates are set one after the other, pressure weights being removed from the stringers after each setting, so a manual orientation of the stringers is made possible. The weights are then set again. The imprecision is still ±1.4 mm. This procedure is very time-consuming and not precise enough. It is therefore proposed to use a gantry robot with a gripper beam to position the stringers, the gantry robot cooperating with a loading unit and a heating station. The time spent is thus substantially reduced and the precision of the product is decisively increased.

### Summary

Disclosed are systems for supporting a workpiece in a manufacturing environment according to claim 1.

In another example, the disclosed system includes a support beam elongated along a longitudinal axis. The support beam has a first end portion and second end portion longitudinally opposed from the first end portion. The support beam includes a first male indexing feature proximate the first end portion and a second male indexing feature proximate the second end portion. The system further includes a first frame assembly located within one work cell of a plurality of work cells. The first frame assembly has a first base portion , a first riser portion defining a first vertical axis, and a first carriage, the first carriage being connected to the first riser portion and moveable relative to the first riser portion along the first vertical axis. The first carriage has a first female indexing feature configured to engage with the first male indexing feature. The system further includes a second frame assembly located within the one work cell of the plurality of work cells. The second frame assembly has a second base portion, a second riser portion defining a second vertical axis, and a second carriage. The second carriage is connected to the second riser portion and is moveable relative to the second riser portion along the second vertical axis. The second carriage includes a second female indexing feature configured to engage with the second male indexing feature.

Also disclosed are methods for supporting a workpiece in a manufacturing environment according to claim 10.

In one example, the disclosed method includes connecting the workpiece to a support beam. The method further includes engaging the support beam with a first frame assembly. The method further includes engaging the support beam with a second frame assembly. The engaging the support beam with the first frame assembly and the second frame assembly includes indexing the support beam with the first frame assembly and the second frame assembly.

Other examples of the disclosed systems and methods for supporting a workpiece in a manufacturing environment will become apparent from the following detailed description, the accompanying drawings, and the appended claims.

### Brief description of the drawings

FIG. 1 is a perspective view of a system for supporting a workpiece in a manufacturing environment;
FIG. 2 is a perspective view of a portion of the system of FIG. 1;
FIG. 3a is a side cross-sectional view of a portion of the system of FIG. 1;
FIG. 3b is a side cross-sectional view of a portion of the system of FIG. 1;
FIG. 4 is a top plan view of a portion of the system of FIG. 1;
FIG. 5 is a side cross-sectional view of a portion of the system of FIG. 1;
FIG. 6 is a side cross-sectional view of a portion of the system of FIG. 1;
FIG. 7 is a perspective view of a portion of the system of FIG. 1;
FIG. 8 is a perspective view of a portion of the system of FIG. 1;
FIG. 9 is a perspective view of a portion of the system of FIG. 1;
FIG. 10 is a perspective view of a portion of the system of FIG. 1;
FIG. 11 is a perspective view of a portion of the system of FIG. 1;
FIG. 12 is a flow diagram of a method for supporting a workpiece in a manufacturing environment;
FIG. 13 is a block diagram of the system of FIG. 1;
FIG. 14 is a flow diagram of an aircraft manufacturing and service methodology; and
FIG. 15 is a schematic illustration of an aircraft.

### Detailed description

The following detailed description refers to the accompanying drawings, which illustrate specific examples described by the present disclosure. Other examples having different structures and operations do not depart from the scope of the present disclosure. Like reference numerals may refer to the same feature, element, or component in the different drawings.

Illustrative, non-exhaustive examples, which may be, but are not necessarily, claimed, of the subject matter according to the present disclosure are provided below. Reference herein to "example" means that one or more feature, structure, element, component, characteristic, and/or operational step described in connection with the example is included in at least one aspect, embodiment, and/or implementation of the subject matter according to the present disclosure. Thus, the phrases "an example," "another example," "one or more examples," and similar language throughout the present disclosure may, but do not necessarily, refer to the same example. Further, the subject matter characterizing any one example may, but does not necessarily, include the subject matter characterizing any other example. Moreover, the subject matter characterizing any one example may be, but is not necessarily, combined with the subject matter characterizing any other example.

As used herein, a system, apparatus, device, structure, article, element, component, or hardware "configured to" perform a specified function is indeed capable of performing the specified function without any alteration, rather than merely having potential to perform the specified function after further modification. In other words, the system, apparatus, device, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware that enable the system, apparatus, structure, article, element, component, or hardware to perform the specified function without further modification. For purposes of this disclosure, a system, apparatus, device, structure, article, element, component, or hardware described as being "configured to" perform a particular function may additionally or alternatively be described as being "adapted to" and/or as being "operative to" perform that function.

For the purpose of this disclosure, the terms "coupled," "coupling," and similar terms refer to two or more elements that are joined, linked, fastened, attached, connected, put in communication, or otherwise associated (e.g., mechanically, electrically, fluidly, optically, electromagnetically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

References throughout the present specification to features, advantages, or similar language used herein do not imply that all of the features and advantages that may be realized with the examples disclosed herein should be, or are in, any single example. Rather, language referring to the features and advantages is understood to mean that a specific feature, advantage, or characteristic described in connection with an example is included in at least one example. Thus, discussion of features, advantages, and similar language used throughout the present disclosure may, but do not necessarily, refer to the same example.

Disclosed are automated methods and systems for orienting a workpiece in a cell, supporting a strong back beam using a structure, such as a J-frame, and moving a workpiece from one cell to the next cell. The supporting structure includes fixed points attached to an overhead structure. The supporting structures are used at each cell location as a part of the indexing of a workpiece along with adjustable arms/straps to connect to the overhead equipment.

The supporting structure provides the capability to precisely orient the workpiece in the cell. Utilizing rail-based machine beds, a metrology reinforced coordinate system is produced. Metrology cycles, part positioning cycles, and machine re-initialization cycles may be performed at any time in any combination to optimize the process. The structure provides the capability to change the elevation of the workpieces in the manual work cells for the purposes of ergonomic optimization. The structure further allows the overhead equipment to be supported while other components, such as bridges, are \ swapped out and/or recycled thereby providing a method of de-conflicting and re-cycling the overhead gantry system. The structure may further allow the overhead equipment to be lowered onto transportation carts for storage and maintenance as required.

The disclosed system 100 and method 1000 may utilize a control system 600. The control system may utilize a supervisory control and data acquisition (SCADA) based controller. The supervisory control and data acquisition (SCADA) based controller for the disclosed system 100 and method 1000 utilize feedback control to ensure proper movement between the plurality of work cells 30. The system 100 and method 1000 may be automated such that each step of the method 1000 is performed automatically based upon data 929 analysis and commands received from a control system 600. Further, any reference to moving or a movable component of the disclosed system 100 and method 1000 may refer to automated movement based upon workpiece 50 geometry and position within the system 100. For example, movement may automatically occur to position the workpiece 50 in a desired location within a work cell 12, 14, 16, 18, 20, ....n, etc. of the system 100 for the work to be performed in that work cell on that particular shape and size of workpiece 50. Movement may include movement along any axis or plane needed to position the workpiece 50 properly within the work cell.

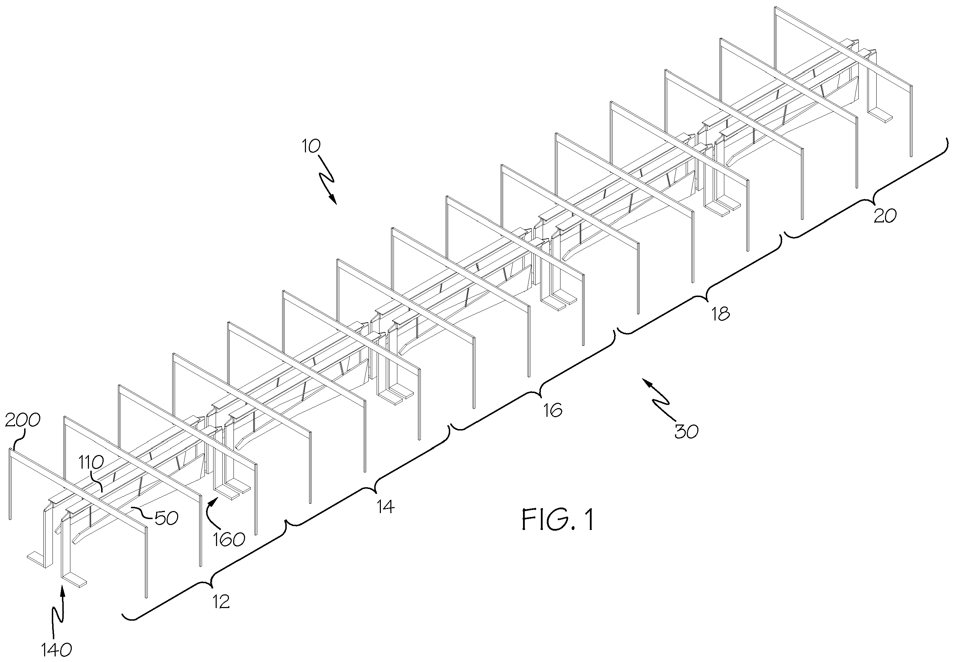

Disclosed is a system 100 for supporting a workpiece 50 in a manufacturing environment 10, as shown in FIG. 1. In one example, the manufacturing environment 10 includes a plurality of work cells 30, see FIG. 1. The plurality of work cells 30 includes, individually, work cells 12, 14, 16, 18, 20, ....n, etc. At least one work cell 12, 14, 16, 18, 20, ...n etc. of the plurality of work cells 30 includes a first frame assembly 140 and a second frame assembly 160 such that each are located within one work cell (e.g., 20) of the plurality of work cells 30.

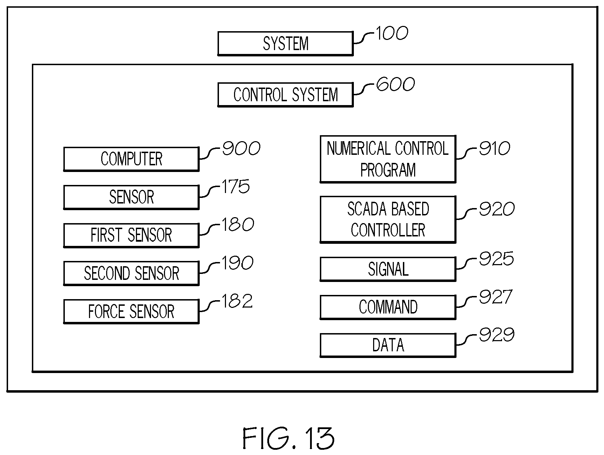

In one example, the system 100 includes a control system 600, as shown in FIG. 13. The control system 600 includes a computer 900. The computer 900 may utilize one or more numerical control program 910 to direct movement of the workpiece 50 within a work cell of the plurality of work cells 30 or between the plurality of work cells 30. The control system 600 may utilize a supervisory control and data acquisition (SCADA) based controller 920 to direct movement and facilitate data 929 analysis.

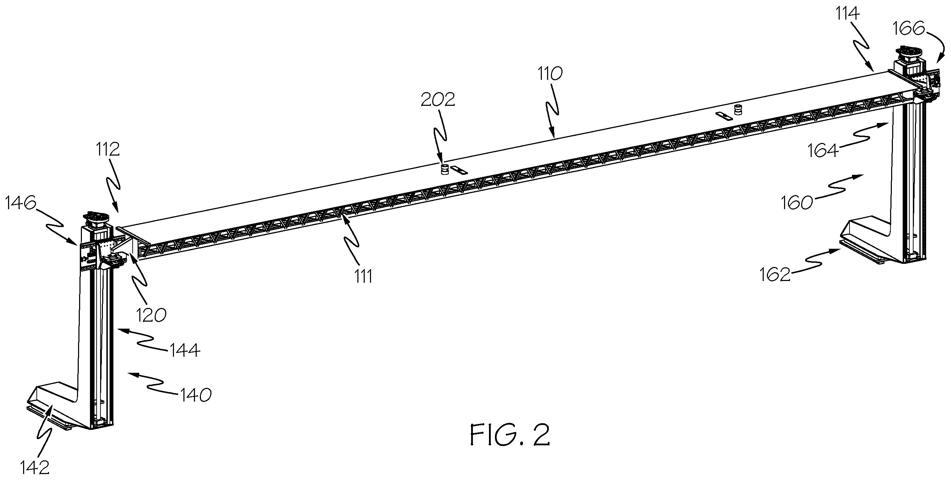

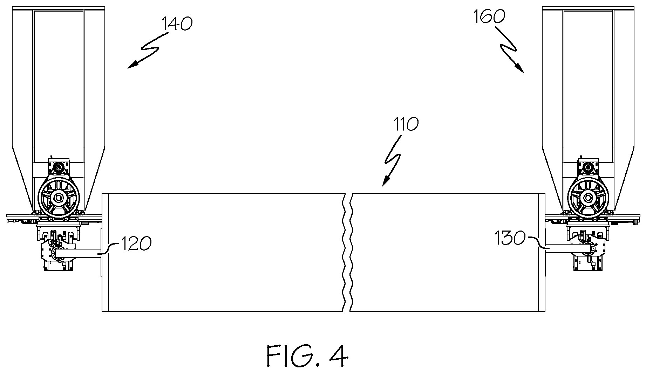

Referring to FIG. 2, the system 100 includes a support beam 110. The support beam 110 is elongated along a longitudinal axis L. The support beam 110 may include a truss 111. The support beam 110 includes a first end portion 112 and a second end portion 114. The second end portion 114 is longitudinally opposed from the first end portion 112. The support beam 110 includes a first beam-side indexing feature 120 proximate the first end portion 112 and a second beam-side indexing feature 130 proximate the second end portion 114, see FIG. 4. In one example, the support beam 110 includes a metallic material and is substantially rigid.

Referring to FIG. 2, the system 100 includes a first frame assembly 140. The first frame assembly 140 may be generally L-shaped or J-shaped. The first frame assembly 140 includes a first base portion 142. The first frame assembly 140 further includes a first riser portion 144. The first riser portion 144 defines a first vertical axis V₁. In one example, the first riser portion 144 and the first base portion 142 are integral such that the first frame assembly 140 is a single, monolithic piece.

Still referring to FIG. 2, the system 100 includes a first carriage 146. The first carriage 146 is connected to the first riser portion 144 of the first frame assembly 140. The first carriage 146 is moveable relative to the first riser portion 144 along the first vertical axis V₁. For example, the first carriage 146 may be movable via any mechanical means such as automated movement via a command 927 from control system 600, manual movement, or a combination thereof. The first carriage 146 includes a first frame-side indexing feature 148 configured to engage with the first beam-side indexing feature 120.

Referring to FIG. 2, the system 100 includes a second frame assembly 160. The second frame assembly 160 may be generally L-shaped or J-shaped. The second frame assembly 160 includes a second base portion 162 and a second riser portion 164. In one example, the second base portion 162 and the second riser portion 164 are integral such that the second frame assembly 160 is a single, monolithic piece. The second riser portion 164 defines a second vertical axis V₂. The system 100 further includes a second carriage 166. The second carriage 166 is connected to the second riser portion 164 and is moveable relative to the second riser portion 164 along the second vertical axis V₂. The second carriage 166 includes a second frame-side indexing feature 168 configured to engage with the second beam-side indexing feature 130.

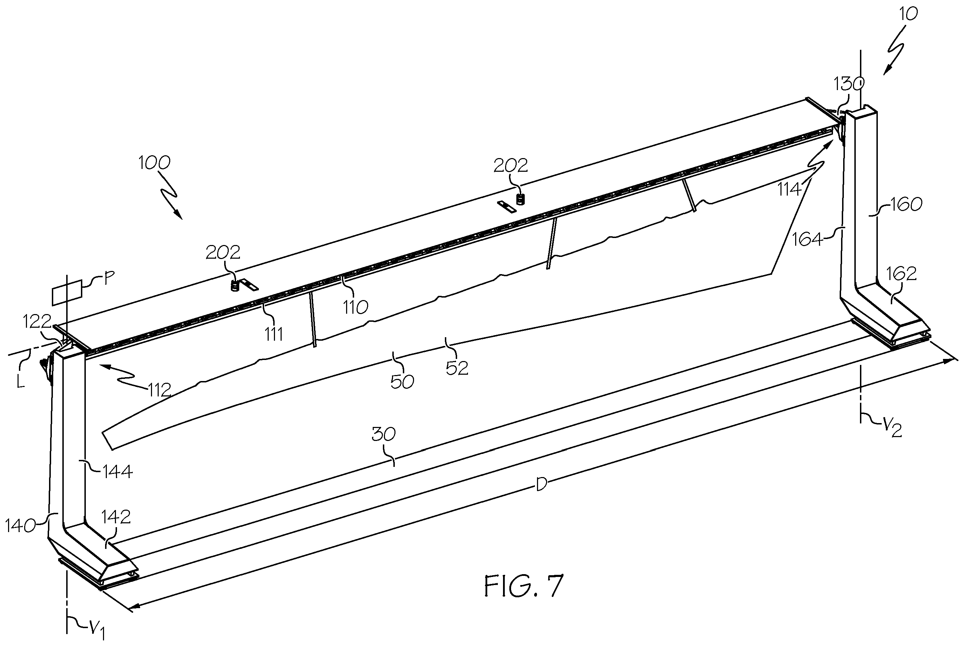

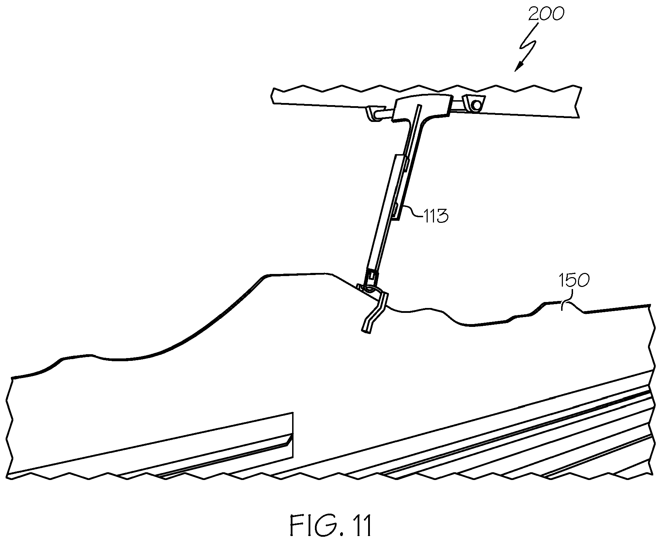

Referring to FIG. 7, the workpiece 50 is suspended from the support beam 110. The system 100 may include a hanger 113 connected to the support beam 110, see FIG. 11. The hanger 113 may be located for hanging the workpiece 50 from the support beam 110.

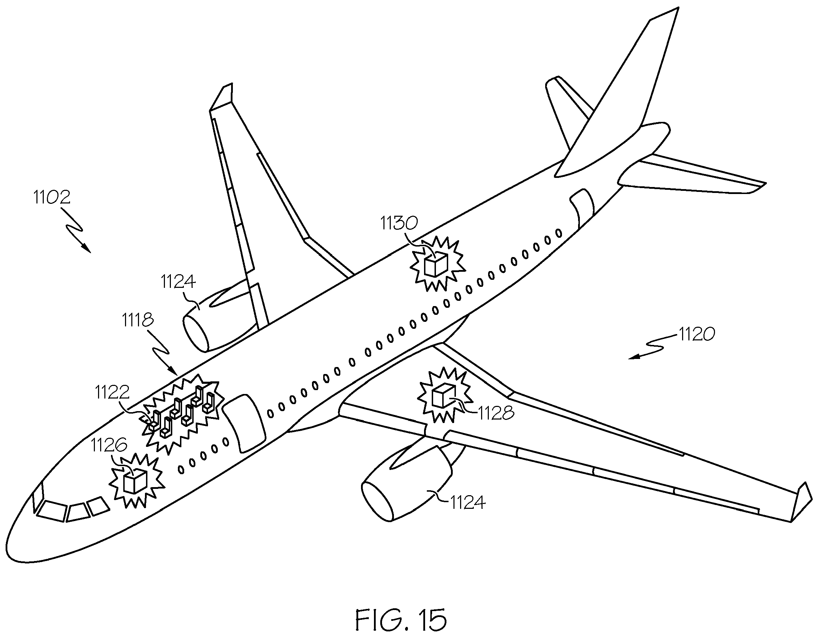

In one example, the workpiece 50 is a wing panel 52 of an aircraft 1102, as shown in FIG. 15. The workpiece 50 may include a composite material. The composite material may include a reinforcement material embedded in a polymeric matrix material, such as carbon fibers embedded in a thermoset (or thermoplastic) resin.

In one example, the first base portion 142 of the first frame assembly 140 is fixedly connected to an underlying floor 60 (e.g., a factory floor). Further, the second base portion 162 of the second frame assembly 160 is fixedly connected to the underlying floor 60 (e.g., a factory floor). In another example, both the first base portion 142 of the first frame assembly 140 and the second base portion 162 of the second frame assembly 160 are fixedly connected to the underlying floor 60.

Referring to FIG. 7, the first frame assembly 140 is spaced a distance D apart from the second frame assembly 160. In one example, the distance D is at least about 1 meter. In another example, the distance D is at least about 2 meters. In another example, the distance D is at least about 3 meters. In yet another example, the distance D is greater than about 3 meters.

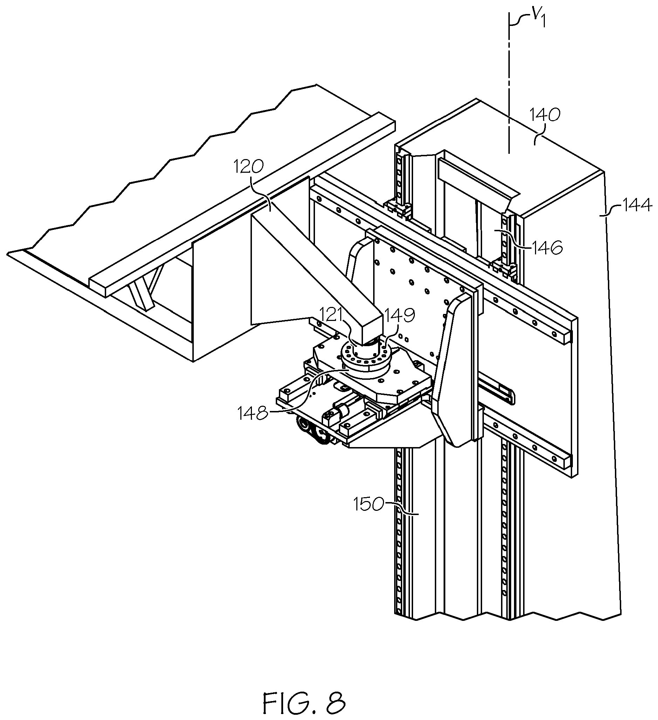

Referring to FIG. 8, in one example, the first riser portion 144 of the first frame assembly 140 includes a first track 150. The first carriage 146 may be configured to engage with the first track 150 and to move relative to the first riser portion 144 along the first track 150 (i.e., the first carriage 146 may be moveable relative to the first riser portion 144).

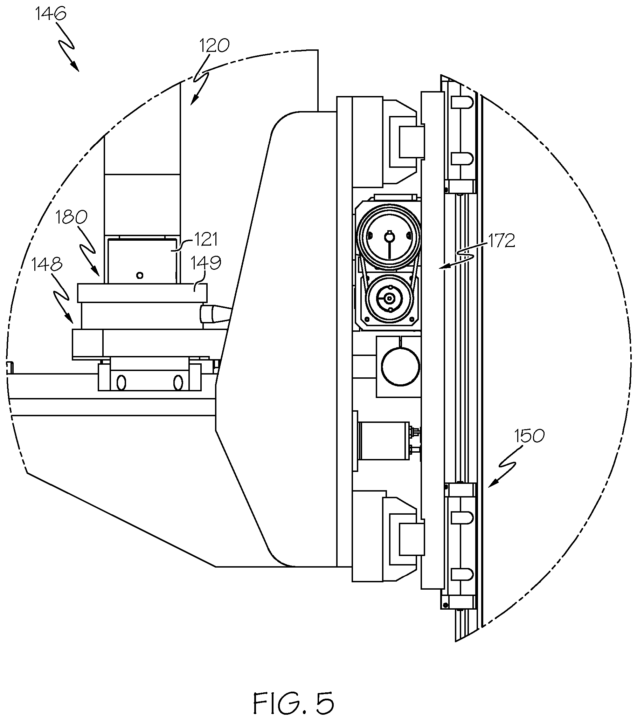

The system 100 may include a motor 172, which may be configured to selectively effect movement of the first carriage 146 along the first track 150 when the first carriage 146 is engaged with the first track 150, as shown in FIG. 5. For example, the motor 172 may enable movement of the first carriage 146 vertically along first vertical axis V₁ along the first track 150 based upon desired location for a workpiece 50 and based upon geometry of the workpiece 50. Movement of the first carriage 146 along the first track 150 may be controlled by the control system 600, such as control based upon data 929 collected and sensed by one or more sensor 175.

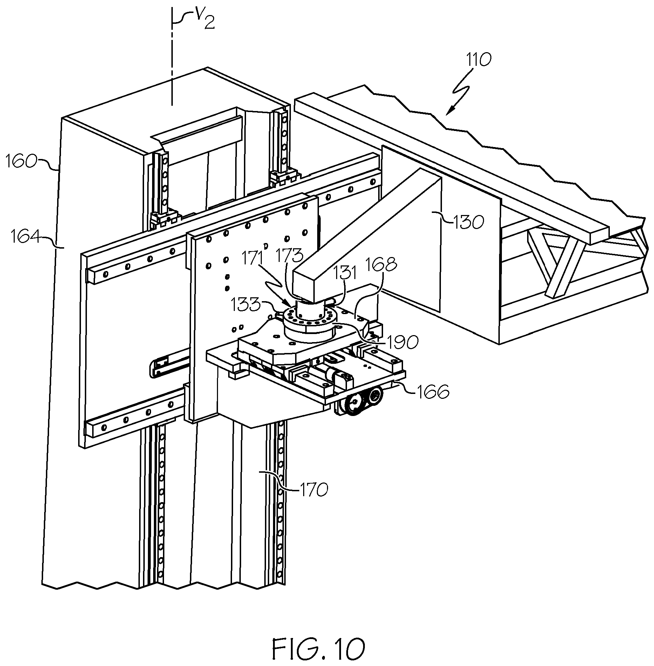

Referring to FIG. 10, in one example, the second riser portion 164 includes a second track 170. The second carriage 166 may be configured to engage with the second track 170 and move relative to the second riser portion 164 along the second track 170.

The system 100 may include another motor 172 configured to selectively effect movement of the second carriage 166 along the second track 170. For example, the motor 172 may enable movement of the second carriage 166 vertically along second vertical axis V₂ along the second track 170 based upon desired location for a workpiece 50 and based upon geometry of the workpiece 50. Movement of the of the second carriage 166 along the second track 170 may be controlled by the control system 600 based upon data 929 collected and sensed by one or more sensor 175.

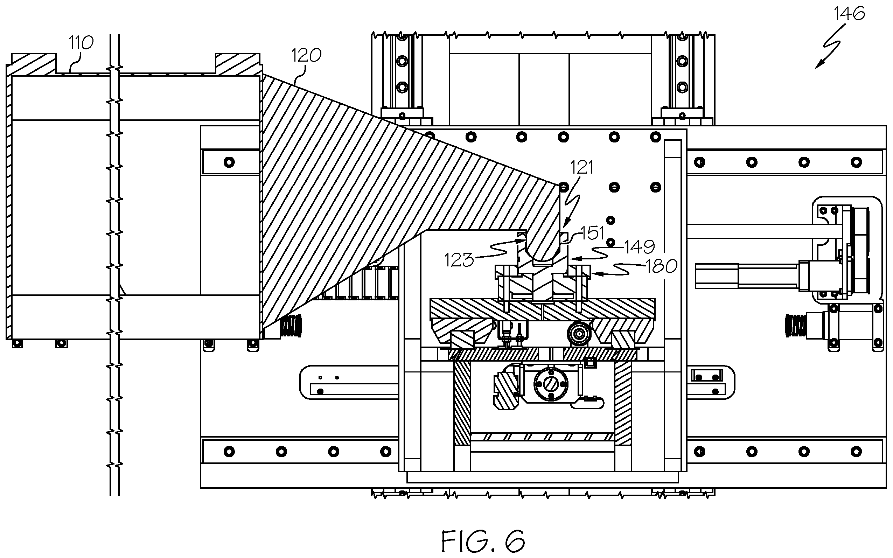

Referring to FIG. 8, in one example, the first beam-side indexing feature 120 includes a first male indexing feature 121. The first frame-side indexing feature 148 includes a first female indexing feature 149 sized and shaped to closely receive the first male indexing feature 121. In one example, the first male indexing feature 121 is or includes a first ball member 123 and the first female indexing feature 149 is or includes a first socket member 151, as shown in FIG. 6. In another example, the first male indexing feature 121 is or includes a generally cone-shaped member and the first female indexing feature 149 is or includes a generally cup-shaped member.

Referring to FIG. 10, in one example, the second beam-side indexing feature 130 includes a second male indexing feature 131 and the second frame-side indexing feature 168 includes a second female indexing feature 171 sized and shaped to closely receive the first male indexing feature 121. In one example, the second male indexing feature 131 is or includes a second ball member 133 and the second female indexing feature 171 is or includes a second socket member 173.

Referring to FIG. 13, in one example, the system 100 includes a first sensor 180 positioned to detect engagement between the first beam-side indexing feature 120 and the first frame-side indexing feature 148. The first sensor 180 is in communication with the control system 600 such that any data 929 collected from the first sensor 180 is sent to the control system 600 for analysis. In one example, the first sensor 180 includes a force sensor 182. In another example, the first sensor 180 includes a motion detector.

Referring to FIG. 13, in one example, the system 100 includes a second sensor 190 positioned to detect engagement between the second beam-side indexing feature 130 and the second frame-side indexing feature 168. The second sensor 190 is in communication with the control system 600 such that any data 929 collected from the second sensor 190 is sent to the control system 600 for analysis. In one example, the second sensor 190 includes a force sensor 182.

Referring to FIG. 1, the system 100 may include a gantry 200 selectively interfaceable with the support beam 110 to move the support beam 110 within the manufacturing environment 10. Gantry 200 may selectively interface with the support beam 110 based upon dimensions of a workpiece 50 for supporting with the support beam 110 in the manufacturing environment. The gantry 200 may selectively interface with the support beam 110 by any suitable mechanical interfacing means. In one example, the gantry 200 is configured to only move the support beam 110 in two directions, the two directions defining a plane P that is generally perpendicular to the first vertical axis V₁. The support beam 110 may include a coupling feature 202 positioned to facilitate interfacing the support beam 110 with the gantry 200.

Referring to FIG. 7, in one or more examples, the system 100 for supporting the workpiece 50 in a manufacturing environment 10 includes support beam 110 elongated along a longitudinal axis L. The support beam 110 includes first end portion 112 and second end portion 114 longitudinally opposed from the first end portion 112. The support beam 110 includes first male indexing feature 121 proximate the first end portion 112 and second male indexing feature 131 proximate the second end portion 114.

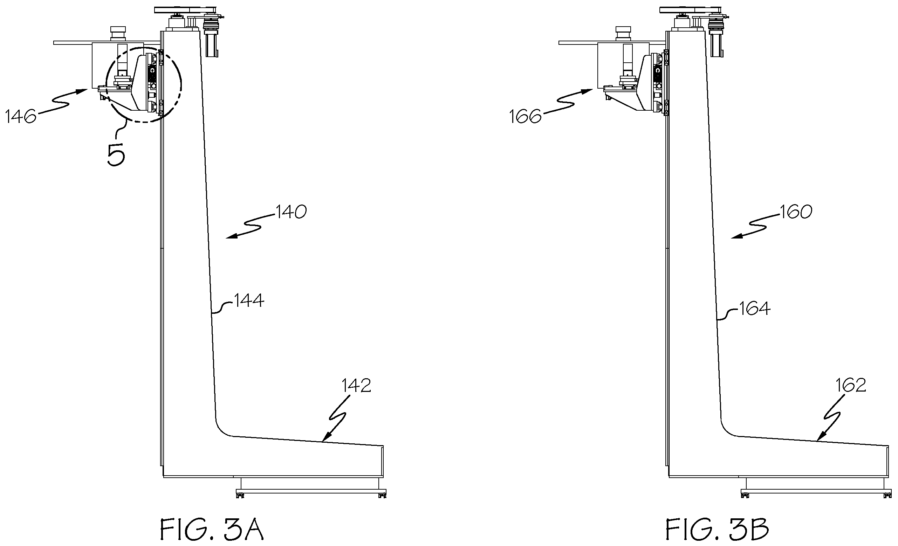

Referring to FIG. 3A and FIG. 7, the system 100 further includes first frame assembly 140 located within one work cell (e.g., 20) of the plurality of work cells 30. The first frame assembly 140 includes first base portion 142, first riser portion 144 defining first vertical axis V₁, and first carriage 146. The first carriage 146 is connected to the first riser portion 144 and is moveable relative to the first riser portion 144 along the first vertical axis V₁. The first carriage 146 first female indexing feature 149 configured to engage with the first male indexing feature 121.

Referring to FIG. 3B and FIG. 7, the system 100 further includes second frame assembly 160 located within the one work cell (e.g., 20) of the plurality of work cells 30. The second frame assembly 160 includes second base portion 162, second riser portion 164 defining second vertical axis V₂, and second carriage 166. The second carriage 166 is connected to the second riser portion 164 and is moveable relative to the second riser portion 164 along the second vertical axis V₂. The second carriage 166 includes second female indexing feature 171 configured to engage with the second male indexing feature 131.

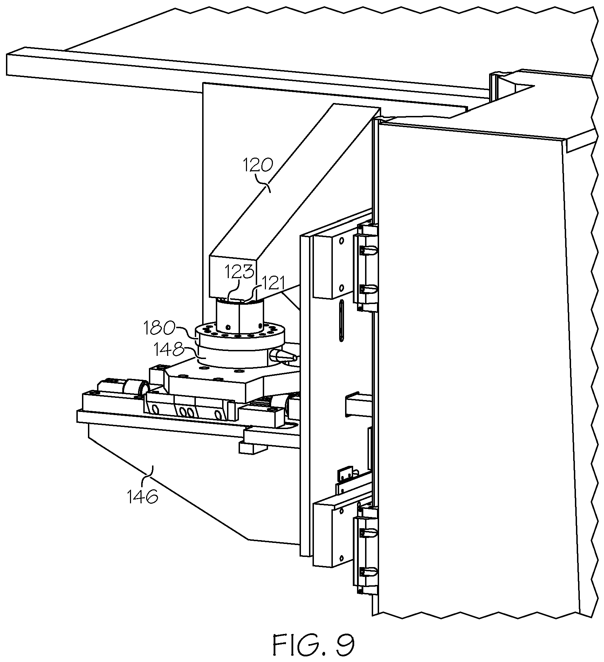

Referring to FIG. 9 and FIG. 13, the system 100 may include a first sensor 180. First sensor 180 may be positioned to detect engagement between the first male indexing feature 121 and the first female indexing feature 149. The system 100 may further include a second sensor 190 positioned to detect engagement between the second male indexing feature 131 and the second female indexing feature 171. The first sensor 180 and the second sensor 190 may be in communication with the control system 600 such that they are configured to send sensed data 929 to the control system 600 for analysis.

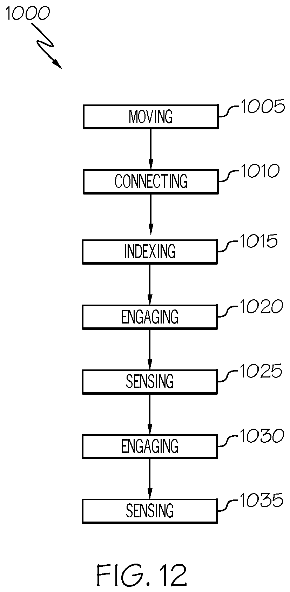

Referring to FIG. 12, disclosed is a method 1000 for supporting a workpiece 50 in a manufacturing environment 10. The method 1000 may be used in conjunction with the system 100 shown and described herein. In one example, each step of the method 1000 may be automated such that it utilizes a control system 600 to automate each step.

In one example, the method 1000 includes connecting 1010 the workpiece 50 to a support beam 110. The support beam 110 is elongated along a longitudinal axis L. The support beam 110 incudes a first end portion 112 and second end portion 114 longitudinally opposed from the first end portion 112. The support beam 110 further includes a first beam-side indexing feature 120 proximate the first end portion 112 and a second beam-side indexing feature 130 proximate the second end portion 114.

Referring to FIG. 12, the method 1000 includes engaging 1020 the support beam 110 with a first frame assembly 140. In one example, the first frame assembly 140 includes a first base portion 142, a first riser portion 144 defining a first vertical axis V₁, and a first carriage 146. The first carriage 146 includes a first frame-side indexing feature 148, see FIG. 8. The first carriage 146 is connected to the first riser portion 144 and moveable relative to the first riser portion 144 along the first vertical axis V₁. For example, the first carriage 146 is movable such that it may change position along first vertical axis V₁ based upon workpiece 50 geometry and specifications. The engaging 1020 the support beam 110 with the first frame assembly 140 includes moving the first carriage 146 relative to the first riser portion 144 such that the first frame-side indexing feature 148 engages the first beam-side indexing feature 120 of the support beam 110.

Still referring to FIG. 12, the method 1000 further includes engaging 1030 the support beam 110 with a second frame assembly 160. The second frame assembly (160) has a second base portion 162, a second riser portion 164 defining a second vertical axis V₂, and a second carriage 166. The second carriage 166 includes a second frame-side indexing feature 168. The second carriage 166 is connected to the second riser portion 164 and moveable relative to the second riser portion 164 along the second vertical axis V₂. For example, the second carriage 166 is movable such that it may change position along second vertical axis V₂ based upon workpiece 50 geometry and specifications. The engaging 1030 the support beam 110 with the second frame assembly 160 includes moving the second carriage 166 relative to the second riser portion 164 such that the second frame-side indexing feature 168 engages the second beam-side indexing feature 130 of the support beam 110.

Referring to FIG. 12, the method 1000 may include sensing 1025 when the first frame-side indexing feature 148 engages the first beam-side indexing feature 120. The method 1000 may further include sensing 1035 when the second frame-side indexing feature 168 engages the second beam-side indexing feature 130. The data 929 collected from sensing 1025 and 1035 may be analyzed by the control system 600 to determine movement within the system 100.

In example, the engaging 1020 the support beam 110 with the first frame assembly 140 and the engaging 1030 the support beam 110 with the second frame assembly 160 are performed simultaneously. In another example, the engaging 1020 the support beam 110 with the first frame assembly 140 and the engaging 1030 the support beam 110 with the second frame assembly 160 are performed sequentially. In another example, the engaging 1020 the support beam 110 with the first frame assembly 140 and the engaging 1030 the support beam 110 with the second frame assembly 160 includes indexing 1015 the support beam 110 with the first frame assembly 140 and the second frame assembly 160.

Referring to FIG. 12, the method 1000 includes moving 1005 the support beam 110 to a position proximate the first frame assembly 140 and the second frame assembly 160 prior to the engaging the support beam 110 with the first frame assembly 140 and the engaging the support beam 110 with the second frame assembly 160. Moving 1005 the support beam 110 includes moving 1005 the support beam 110 with a gantry 200. In another example, the moving 1005 the support beam 110 includes moving 1005 the support beam 110 in only two directions, the two directions defining a plane P that is generally perpendicular to a first vertical axis V₁ defined by the first frame assembly 140.

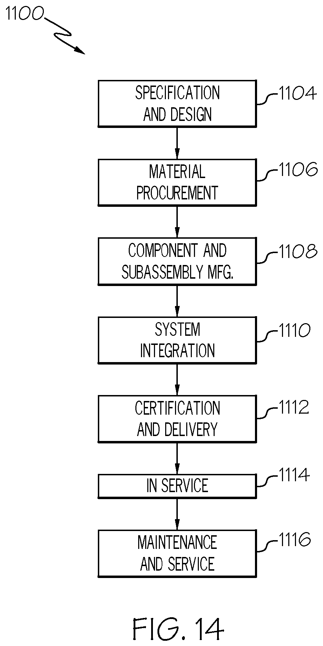

Examples of the subject matter disclosed herein may be described in the context of aircraft manufacturing and service method 1100 as shown in FIG. 14 and aircraft 1102 as shown in FIG. 15. During pre-production, service method 1100 may include specification and design (block 1104) of aircraft 1102 and material procurement (block 1106). During production, component and subassembly manufacturing (block 1108) and system integration (block 1110) of aircraft 1102 may take place. Thereafter, aircraft 1102 may go through certification and delivery (block 1112) to be placed in service (block 1114). While in service, aircraft 1102 may be scheduled for routine maintenance and service (block 1116). Routine maintenance and service may include modification, reconfiguration, refurbishment, etc. of one or more systems of aircraft 1102.

Each of the processes of service method 1100 may be performed or carried out by a system integrator, a third party, and/or an operator (e.g., a customer). For the purposes of this description, a system integrator may include, without limitation, any number of aircraft manufacturers and major-system subcontractors; a third party may include, without limitation, any number of vendors, subcontractors, and suppliers; and an operator may be an airline, leasing company, military entity, service organization, and so on.

As shown in FIG. 15, aircraft 1102 produced by service method 1100 may include airframe 1118 with a plurality of high-level systems 1120 and interior 1122. Examples of high-level systems 1120 include one or more of propulsion system 1124, electrical system 1126, hydraulic system 1128, and environmental system 1130. Any number of other systems may be included. Although an aerospace example is shown, the principles disclosed herein may be applied to other industries, such as the automotive industry. Accordingly, in addition to aircraft 1102, the principles disclosed herein may apply to other vehicles, e.g., land vehicles, marine vehicles, space vehicles, etc.

The disclosed systems and methods for supporting a workpiece in a manufacturing environment may be employed during any one or more of the stages of the manufacturing and service method 1100. For example, components or subassemblies corresponding to component and subassembly manufacturing (block 1108) may be fabricated or manufactured in a manner similar to components or subassemblies produced while aircraft 1102 is in service (block 1114), such as by employing the disclosed systems and methods for supporting a workpiece in a manufacturing environment. Also, one or more examples of the disclosed systems and methods for supporting a workpiece in a manufacturing environment may be utilized during production stages, i.e. component and subassembly manufacturing (block 1108) and manufacturing and system integration (block 1110), for example, by substantially expediting assembly of or reducing the cost of aircraft 1102. Similarly, one or more examples of the disclosed systems and methods for supporting a workpiece in a manufacturing environment may be utilized, for example and without limitation, while aircraft 1102 is in service (block 1114) and/or during maintenance and service (block 1116).

The disclosed systems and methods for supporting a workpiece in a manufacturing environment are described in the context of an aircraft. However, one of ordinary skill in the art will readily recognize that the disclosed systems and methods for supporting a workpiece in a manufacturing environment may be utilized for a variety of applications. For example, the disclosed systems and methods for supporting a workpiece in a manufacturing environment may be implemented in various types of vehicles including, e.g., helicopters, watercraft, passenger ships, automobiles, and the like.

Although various examples of the disclosed systems and methods for supporting a workpiece in a manufacturing environment have been shown and described, modifications may occur to those skilled in the art upon reading the specification. The present application includes such modifications and is limited only by the scope of the claims.

## Claims

1. A system (100) for supporting a workpiece (50) in a manufacturing environment (10), the system comprising:
- A support beam (110) elongated along a longitudinal axis (L) and comprising a first end portion (112) and a second end portion (114) longitudinally opposed from the first end portion (112), the support beam (110) comprising a first beam-side indexing feature (120) proximate the first end portion (112) and a second beam-side indexing feature (130) proximate the second end portion (114);
- a first frame assembly (140) comprising a first base portion (142), a first riser portion (144) defining a first vertical axis (V₁), and a first carriage (146), the first carriage (146) being connected to the first riser portion (144) and moveable relative to the first riser portion (144) along the first vertical axis (V₁), wherein the first carriage (146) comprises a first frame-side indexing feature (148) configured to engage with the first beam-side indexing feature (120);
- a second frame assembly (160) comprising a second base portion (162), a second riser portion (164) defining a second vertical axis (V₂), and a second carriage (166), the second carriage (166) being connected to the second riser portion (164) and moveable relative to the second riser portion (164) along the second vertical axis (V₂), wherein the second carriage (166) comprises a second frame-side indexing feature (168) configured to engage with the second beam-side indexing feature (130); and
- a gantry (200) selectively interfaceable with the support beam (110) to move the support beam (110) within the manufacturing environment (10) based upon data collected and sensed by one or more sensors (175).

2. The system of claim 1 wherein the manufacturing environment comprises a plurality of work cells (30), and wherein both the first frame assembly (140) and the second frame assembly (160) are located within one work cell (12, 14, 16, 18, 20, ...n) of the plurality of work cells (30).

3. The system of claim 1 comprising the workpiece (50), wherein the workpiece (50) is suspended from the support beam (110), and preferably wherein the workpiece (50) is a wing panel (52) of an aircraft (1102) and/or preferably wherein the workpiece (50) comprises a composite material, the composite material comprising a reinforcement material embedded in a polymeric matrix material.

4. The system of claim 1 wherein:
- the support beam (110) comprises a truss (111) and/or comprises a metallic material and is substantially rigid; and/or
- the first base portion (142) and the first riser portion (144) of the first frame assembly (140) are integral; and/or
- the first base portion (142) of the first frame assembly (140) is fixedly connected to an underlying floor (60), and optionally wherein the second base portion (162) of the second frame assembly (160) is fixedly connected to the underlying floor (60); and/or
- the first frame assembly (140) is spaced a distance (D) apart from the second frame assembly (160), and wherein the distance (D) is at least about 2 meters; and/or
- the system (100) further comprises a hanger (113) connected to the support beam (110) and located for hanging the workpiece (50) from the support beam (110).

5. The system of claim 1 wherein the first riser portion (144) comprises a first track (150), and wherein the first carriage (146) is engaged with the first track (150) and is moveable relative to the first vertical axis (V₁) and first riser portion (144) along the first track (150), and wherein the system (100) preferably further comprises a motor (172) configured to selectively effect movement of the first carriage (146) relative to the first vertical axis (V₁) along the first track (150); and/or
wherein the second riser portion (164) comprises a second track (170), and wherein the second carriage (166) is engaged with the second track (170) and moveable relative to the second vertical axis (V₂) and second riser portion (164) along the second track (170), and wherein the system (100) preferably comprises a motor (172) configured to selectively effect movement of the second carriage (166) relative to the second vertical axis (V₂) along the second track (170).

6. The system of claim 1 wherein:
- the first beam-side indexing feature (120) comprises a first male indexing feature (121), and
- the first frame-side indexing feature (148) comprises a first female indexing feature (149) sized and shaped to closely receive the first male indexing feature (121); and preferably wherein the first male indexing feature (121) comprises a first ball member (123) and the first female indexing feature (149) comprises a first socket member (151); and
- optionally the second beam-side indexing feature (130) comprises a second male indexing feature (131), and the second frame-side indexing feature (168) comprises a second female indexing feature (171) sized and shaped to closely receive the second male indexing feature (1310, and preferably wherein the second male indexing feature (131) comprises a second ball member (133) and the second female indexing feature (171) comprises a second socket member (173).

7. The system of claim 1 further comprising a first sensor (180) positioned to detect engagement between the first beam-side indexing feature (120) and the first frame-side indexing feature (148), wherein the first sensor (180) preferably comprises a force sensor 182), and optionally further comprising a second sensor (190) positioned to detect engagement between the second beam-side indexing feature (130) and the second frame-side indexing feature (168), wherein the second sensor (190) preferably comprises a force sensor (182).

8. The system (100) of claim 1 wherein the gantry (200) is configured to only move the support beam (110) in two directions, the two directions defining a plane (P) that is generally perpendicular to the first vertical axis (V₁) and/or wherein the support beam (110) comprises a coupling feature (202) positioned to facilitate interfacing the support beam (110) with the gantry (200).

9. The system (100) for supporting a workpiece (50) in a manufacturing environment (10) of claim 1, the manufacturing environment (10) comprising a plurality of work cells (300, the system (100) further comprising:
- the first frame assembly (140) being located within one work cell (12, 14, 16, 18, 20, ...n) of the plurality of work cells (30); and
- the second frame assembly being located within the one work cell (12, 14, 16, 18, 20, ...n) of the plurality of work cells (30); and
preferably further comprising:
- a first sensor (180) positioned to detect engagement between the first male indexing feature (121) and the first female indexing feature (149); and
- a second sensor (190) positioned to detect engagement between the second male indexing feature (131) and the second female indexing feature (171).

10. A method (1000) for supporting a workpiece (50) in a manufacturing environment (10), the method (1000) comprising:
- connecting (1010) the workpiece (50) to a support beam (110);
- engaging (1020) the support beam (110) with a first frame assembly (140); and
- engaging (1030) the support beam (110) with a second frame assembly (160),
wherein the engaging (1020) the support beam (110) with the first frame assembly (140) and the engaging (1030) the support beam (110) with the second frame assembly (160) comprise indexing the support beam (110) with the first frame assembly (140) and the second frame assembly (160); and
further comprising moving the support beam (110) to a position proximate the first frame assembly (140) and the second frame assembly (160) prior to the engaging (1020) the support beam (110) with the first frame assembly (140) and the engaging (1030) the support beam (110) with the second frame assembly (160), and
wherein the moving the support beam (110) comprises moving (1005) the support beam (110) with a gantry (200); and
preferably wherein the engaging (1020) the support beam (110) with the first frame assembly (140) and the engaging (1030) the support beam (110) with the second frame assembly (1600 are performed simultaneously.

11. The method of claim 10,
wherein the moving (1005) the support beam (110) comprises moving the support beam (110) in only two directions, the two directions defining a plane (P) that is generally perpendicular to a first vertical axis (V₁) defined by the first frame assembly (140).

12. The method of claim 10, wherein the support beam (110) is elongated along a longitudinal axis (L) and comprises a first end portion (112) and second end portion (114) longitudinally opposed from the first end portion (112).

13. The method of claim 12, wherein the support beam (110) comprises a first beam-side indexing feature (121) proximate the first end portion (112) and a second beam-side indexing feature (131) proximate the second end portion (114).

14. The method of claim 13 wherein the first frame assembly (140) comprises a first base portion (142), a first riser portion (144) defining a first vertical axis (V₁), and a first carriage (146) comprising a first frame-side indexing feature (148), the first carriage (146) being connected to the first riser portion (144) and moveable relative to the first riser portion (144) along the first vertical axis (V₁); and optionally wherein engaging (1020) the support beam (110) with the first frame assembly (140) comprises moving the first carriage (146) relative to the first riser portion (144) such that the first frame-side indexing feature (148) engages the first beam-side indexing feature (121) of the support beam (110), and further optionally further comprising sensing (1025) when the first frame-side indexing feature (148) engages the first beam-side indexing feature (121).

15. The method of claim 13 wherein the second frame assembly (160) comprises a second base portion (162), a second riser portion (164) defining a second vertical axis (V₂), and a second carriage (166) comprising a second frame-side indexing feature 168), the second carriage (166) being connected to the second riser portion (164) and moveable relative to the second riser portion (164) along the second vertical axis (V₂), and optionally wherein the engaging the support beam (110) with the second frame assembly (160) comprises moving the second carriage (166) relative to the second riser portion (164) such that the second frame-side indexing feature (168) engages the second beam-side indexing feature (131) of the support beam (110), and/or optionally further comprising sensing (1035) when the second frame-side indexing feature (168) engages the second beam-side indexing feature (131).

## Patentansprüche

1. System (100) zum Stützen eines Werkstücks (50) in einer Fertigungsumgebung (10), das System umfassend:
- einen Stützbalken (110), der entlang einer Längsachse (L) langgestreckt ist und umfassend einen ersten Endabschnitt (112) und einen zweiten Endabschnitt (114), der dem ersten Endabschnitt (112) in Längsrichtung gegenüberliegt, der Stützbalken (110) umfassend ein erstes balkenseitiges Indexierungsmerkmal (120) in der Nähe des ersten Endabschnitts (112) und ein zweites balkenseitiges Indexierungsmerkmal (130) in der Nähe des zweiten Endabschnitts (114);
- eine erste Rahmenanordnung (140), umfassend einen ersten Basisabschnitt (142), einen ersten Steigabschnitt (144), der eine erste vertikale Achse (V₁) definiert und einen ersten Schlitten (146), wobei der erste Schlitten (146) mit dem ersten Steigabschnitt (144) verbunden ist und relativ zu dem ersten Steigabschnitt (144) entlang der ersten vertikalen Achse (V₁) beweglich ist, wobei der erste Schlitten (146) eine erste rahmenseitige Indexierungsmerkmal (148) umfasst, die konfiguriert ist, um mit der ersten balkenseitigen Indexierungsmerkmal (120) einzugreifen;
- eine zweite Rahmenanordnung (160), umfassend einen zweiten Basisabschnitt (162), einen zweiten Steigabschnitt (164), der eine zweite vertikale Achse (V₂) definiert und einen zweiten Schlitten (166), wobei der zweite Schlitten (166) mit dem zweiten Steigabschnitt (164) verbunden ist und relativ zu dem zweiten Steigabschnitt (164) entlang der zweiten vertikalen Achse (V₂) beweglich ist, wobei der zweite Schlitten (166) eine zweite rahmenseitige Indexierungsmerkmal (168) umfasst, die konfiguriert ist, um mit der zweiten balkenseitigen Indexierungsmerkmal (130) einzugreifen; und
- ein Kranportal (200), das an den Stützbalken (110) selektiv angekoppelt werden kann, um den Stützbalken (110) innerhalb der Fertigungsumgebung (10) basierend auf Daten zu bewegen, die durch einen oder mehrere Sensoren (175) gesammelt und erfasst werden.

2. System nach Anspruch 1, wobei die Fertigungsumgebung eine Vielzahl von Arbeitszellen (30) umfasst und wobei sowohl die erste Rahmenanordnung (140) als auch die zweite Rahmenanordnung (160) innerhalb einer Arbeitszelle (12, 14, 16, 18, 20, ...n) der Vielzahl von Arbeitszellen (30) lokalisiert sind.

3. System nach Anspruch 1, umfassend das Werkstück (50), wobei das Werkstück (50) an dem Stützbalken (110) aufgehängt ist, und vorzugsweise wobei das Werkstück (50) eine Tragfläche (52) eines Flugzeugs (1102) ist und/oder vorzugsweise wobei das Werkstück (50) ein Verbundmaterial umfasst, das Verbundmaterial umfassend ein Verstärkungsmaterial, das in ein Polymermatrixmaterial eingebettet ist.

4. System nach Anspruch 1, wobei:
- der Stützbalken (110) ein Gerippe (111) umfasst und/oder ein metallisches Material umfasst und im Wesentlichen starr ist; und/oder
- der erste Basisabschnitt (142) und der erste Steigabschnitt (144) der ersten Rahmenanordnung (140) einstückig sind; und/oder
- der erste Basisabschnitt (142) der ersten Rahmenanordnung (140) mit einem darunterliegenden Boden (60) fest verbunden ist, und optional wobei der zweite Basisabschnitt (162) der zweiten Rahmenanordnung (160) mit dem darunterliegenden Boden (60) fest verbunden ist; und/oder
- die erste Rahmenanordnung (140) um einen Abstand (D) von der zweiten Rahmenanordnung (160) beabstandet ist, und wobei der Abstand (D) mindestens etwa 2 Meter beträgt; und/oder
- das System (100) ferner einen Aufhänger (113) umfasst, der mit dem Stützbalken (110) verbunden ist und zum Aufhängen des Werkstücks (50) von dem Stützbalken (110) lokalisiert ist.

5. System nach Anspruch 1, wobei der erste Steigabschnitt (144) eine erste Bahn (150) umfasst und wobei der erste Schlitten (146) mit der ersten Bahn (150) in Eingriff steht und relativ zu der ersten vertikalen Achse (V₁) und dem ersten Steigabschnitt (144) entlang der ersten Bahn (150) beweglich ist, und wobei das System (100) vorzugsweise ferner einen Motor (172) umfasst, der konfiguriert ist, um eine Bewegung des ersten Schlittens (146) relativ zu der ersten vertikalen Achse (V₁) entlang der ersten Bahn (150) selektiv zu bewirken; und/oder
wobei der zweite Steigabschnitt (164) eine zweite Bahn (170) umfasst und wobei der zweite Schlitten (166) mit der zweiten Bahn (170) in Eingriff steht und relativ zu der zweiten vertikalen Achse (V₂) und dem zweiten Steigabschnitt (164) entlang der zweiten Bahn (170) beweglich ist, und wobei das System (100) vorzugsweise einen Motor (172) umfasst, der konfiguriert ist, um eine Bewegung des zweiten Schlittens (166) relativ zu der zweiten vertikalen Achse (V₂) entlang der zweiten Bahn (170) selektiv zu bewirken.

6. System nach Anspruch 1, wobei:
- das erste balkenseitige Indexierungsmerkmal (120) ein erstes männliches Indexierungsmerkmal (121) umfasst, und
- das erste rahmenseitige Indexierungsmerkmal (148) ein erstes weibliches Indexierungsmerkmal (149), das bemessen und geformt ist, um das erste männliche Indexierungsmerkmal (121) eng aufzunehmen, umfasst; und vorzugsweise wobei das erste männliche Indexierungsmerkmal (121) ein erstes Kugelelement (123) umfasst und das erste weibliche Indexierungsmerkmal (149) ein erstes Fassungselement (151) umfasst; und
- optional das zweite balkenseitige Indexierungsmerkmal (130) ein zweites männliches Indexierungsmerkmal (131) umfasst, und das zweite rahmenseitige Indexierungsmerkmal (168) ein zweites weibliches Indexierungsmerkmal (171), das bemessen und geformt ist, um das zweite männliche Indexierungsmerkmal (1310 eng aufzunehmen, umfasst, und vorzugsweise wobei das zweite männliche Indexierungsmerkmal (131) ein zweites Kugelelement (133) umfasst und das zweite weibliche Indexierungsmerkmal (171) ein zweites Fassungselement (173) umfasst.

7. System nach Anspruch 1, ferner umfassend einen ersten Sensor (180), der positioniert ist, um den Eingriff zwischen dem ersten balkenseitigen Indexierungsmerkmal (120) und dem ersten rahmenseitigen Indexierungsmerkmal (148) zu erkennen, wobei der erste Sensor (180) vorzugsweise einen Kraftsensor 182) umfasst, und optional ferner umfassend einen zweiten Sensor (190), der positioniert ist, um den Eingriff zwischen dem zweiten balkenseitigen Indexierungsmerkmal (130) und dem zweiten rahmenseitigen Indexierungsmerkmal (168) zu erkennen, wobei der zweite Sensor (190) vorzugsweise einen Kraftsensor (182) umfasst.

8. System (100) nach Anspruch 1, wobei das Kranportal (200) konfiguriert ist, um nur den Stützbalken (110) in zwei Richtungen zu bewegen, wobei die zwei Richtungen eine Ebene (P) definieren, die im Allgemeinen senkrecht zu der ersten vertikalen Achse (V₁) ist und/oder wobei der Stützbalken (110) ein Kopplungsmerkmal (202) umfasst, das positioniert ist, um das Ankoppeln des Stützbalkens (110) an das Kranportal (200) zu ermöglichen.

9. System (100) zum Stützen eines Werkstücks (50) in einer Fertigungsumgebung (10) nach Anspruch 1, die Fertigungsumgebung (10) umfassend eine Vielzahl von Arbeitszellen (300, das System (100) ferner umfassend:
- wobei die erste Rahmenanordnung (140) innerhalb einer Arbeitszelle (12, 14, 16, 18, 20, ...n) der Vielzahl von Arbeitszellen (30) lokalisiert ist; und
- wobei die zweite Rahmenanordnung innerhalb der einen Arbeitszelle (12, 14, 16, 18, 20, ...n) der Vielzahl von Arbeitszellen (30) lokalisiert ist; und
vorzugsweise ferner umfassend:
- einen ersten Sensor (180), der positioniert ist, um den Eingriff zwischen dem ersten männlichen Indexierungsmerkmal (121) und dem ersten weiblichen Indexierungsmerkmal (149) zu erkennen; und
- einen zweiten Sensor (190), der positioniert ist, um den Eingriff zwischen dem zweiten männlichen Indexierungsmerkmal (131) und dem zweiten weiblichen Indexierungsmerkmal (171) zu erkennen.

10. Verfahren (1000) zum Stützen eines Werkstücks (50) in einer Fertigungsumgebung (10), das Verfahren (1000) umfassend:
- Verbinden (1010) des Werkstücks (50) mit einem Stützbalken (110);
- Ineinandergreifen (1020) des Stützbalkens (110) mit einer ersten Rahmenanordnung (140); und
- Ineinandergreifen (1030) des Stützbalkens (110) mit einer zweiten Rahmenanordnung (160),
wobei das Ineinandergreifen (1020) des Stützbalkens (110) mit der ersten Rahmenanordnung (140) und das Ineinandergreifen (1030) des Stützbalkens (110) mit der zweiten Rahmenanordnung (160) das Indexieren des Stützbalkens (110) mit der ersten Rahmenanordnung (140) und der zweiten Rahmenanordnung (160) umfassen; und
ferner umfassend das Bewegen des Stützbalkens (110) zu einer Position in der Nähe der ersten Rahmenanordnung (140) und der zweiten Rahmenanordnung (160) vor dem Ineinandergreifen (1020) des Stützbalkens (110) mit der ersten Rahmenanordnung (140) und dem Ineinandergreifen (1030) des Stützbalkens (110) mit der zweiten Rahmenanordnung (160), und
wobei das Bewegen des Stützbalkens (110) das Bewegen (1005) des Stützbalkens (110) mit einem Kranportal (200) umfasst; und
vorzugsweise wobei das Ineinandergreifen (1020) des Stützbalkens (110) mit der ersten Rahmenanordnung (140) und das Ineinandergreifen (1030) des Stützbalkens (110) mit der zweiten Rahmenanordnung (1600) gleichzeitig durchgeführt werden.

11. Verfahren nach Anspruch 10,
wobei das Bewegen (1005) des Stützbalkens (110) das Bewegen des Stützbalkens (110) in nur zwei Richtungen umfasst, wobei die zwei Richtungen eine Ebene (P) definieren, die im Allgemeinen senkrecht zu einer ersten vertikalen Achse (V₁) ist, die durch die erste Rahmenanordnung (140) definiert ist.

12. Verfahren nach Anspruch 10, wobei der Stützbalken (110) entlang einer Längsachse (L) langgestreckt ist und einen ersten Endabschnitt (112) und einen zweiten Endabschnitt (114), der dem ersten Endabschnitt (112) in Längsrichtung gegenüberliegt, umfasst.

13. Verfahren nach Anspruch 12, wobei der Stützbalken (110) ein erstes balkenseitiges Indexierungsmerkmal (121) in der Nähe des ersten Endabschnitts (112) und ein zweites balkenseitiges Indexierungsmerkmal (131) in der Nähe des zweiten Endabschnitts (114) umfasst.

14. Verfahren nach Anspruch 13, wobei die erste Rahmenanordnung (140) einen ersten Basisabschnitt (142), einen ersten Steigabschnitt (144), der eine erste vertikale Achse (V₁) definiert, und einen ersten Schlitten (146) umfasst, umfassend ein erstes rahmenseitiges Indexierungsmerkmal (148), wobei der erste Schlitten (146) mit dem ersten Steigabschnitt (144) verbunden ist und relativ zu dem ersten Steigabschnitt (144) entlang der ersten vertikalen Achse (V₁) beweglich ist; und optional wobei das Ineinandergreifen (1020) des Stützbalkens (110) mit der ersten Rahmenanordnung (140) das Bewegen des ersten Schlittens (146) relativ zu dem ersten Steigabschnitt (144) umfasst, derart, dass das erste rahmenseitige Indexierungsmerkmal (148) das erste balkenseitige Indexierungsmerkmal (121) des Stützbalkens (110) in Eingriff nimmt, und ferner optional ferner umfassend das Erfassen (1025), wenn das erste rahmenseitige Indexierungsmerkmal (148) das erste balkenseitigen Indexierungsmerkmal (121) in Eingriff nimmt.

15. Das Verfahren nach Anspruch 13, wobei die zweite Rahmenanordnung (160) einen zweiten Basisabschnitt (162) und einen zweiten Steigabschnitt (164), der eine zweite vertikale Achse (V₂) definiert, und einen zweiten Schlitten (166) umfasst, umfassend ein zweites rahmenseitige Indexierungsmerkmal 168), wobei der zweite Schlitten (166) mit dem zweiten Steigabschnitt (164) verbunden ist und relativ zu dem zweiten Steigabschnitt (164) entlang der zweiten vertikalen Achse (V₂) beweglich ist, und wobei optional das Ineingriffbringen des Stützbalkens (110) mit der zweiten Rahmenanordnung (160) das Bewegen des zweiten Schlittens (166) relativ zu dem zweiten Steigabschnitt (164) umfasst, derart, dass das zweite rahmenseitige Indexierungsmerkmal (168) das zweite balkenseitige Indexierungsmerkmal (131) des Stützbalkens (110) in Eingriff nimmt, und/oder optional ferner umfassend das Erfassen (1035), wenn das zweite rahmenseitige Indexierungsmerkmal (168) das zweite balkenseitigen Indexierungsmerkmal (131) in Eingriff nimmt.

## Revendications

1. Système (100) de support d'une pièce (50) dans un environnement de fabrication (10), le système comprenant :
- une poutre de support (110) allongée le long d'un axe longitudinal (L) et comprenant une première partie d'extrémité (112) et une seconde partie d'extrémité (114) opposée longitudinalement à la première partie d'extrémité (112), la poutre de support (110) comprenant un premier élément d'indexation côté poutre (120) à proximité de la première partie d'extrémité (112) et un second élément d'indexation côté poutre (130) à proximité de la seconde partie d'extrémité (114) ;
- un premier ensemble cadre (140) comprenant une première partie de base (142), une première partie de colonne montante (144) définissant un premier axe vertical (V₁), et un premier chariot (146), le premier chariot (146) étant relié à la première partie de colonne montante (144) et pouvant se déplacer par rapport à la première partie de colonne montante (144) le long du premier axe vertical (V₁), dans lequel le premier chariot (146) comprend un premier élément d'indexation côté cadre (148) conçue pour venir en prise avec la premier élément d'indexation côté poutre (120) ;
- un second ensemble cadre (160) comprenant une seconde partie de base (162), une seconde partie de colonne montante (164) définissant un second axe vertical (V₂), et un second chariot (166), le second chariot (166) étant relié à la seconde partie de colonne montante (164) et pouvant se déplacer par rapport à la seconde partie de colonne montante (164) le long du second axe vertical (V₂), dans lequel le second chariot (166) comprend un second élément d'indexation côté cadre (168) conçu pour venir en prise avec le second élément d'indexation côté poutre (130) ; et
- un portique (200) pouvant être interfacé sélectivement avec la poutre de support (110) afin de déplacer la poutre de support (110) à l'intérieur de l'environnement de fabrication (10) sur la base de données collectées et détectées par un ou plusieurs capteurs (175).

2. Système selon la revendication 1, dans lequel l'environnement de fabrication comprend une pluralité de cellules de travail (30), et dans lequel le premier ensemble cadre (140) et le second ensemble cadre (160) sont tous deux situés à l'intérieur d'une cellule de travail (12, 14, 16, 18, 20, ...n) de la pluralité de cellules de travail (30).

3. Système selon la revendication 1 comprenant la pièce (50), dans lequel la pièce (50) est suspendue à la poutre de support (110), et de préférence, dans lequel la pièce (50) est un panneau de voilure (52) d'un aéronef (1102) et/ou de préférence, dans lequel la pièce (50) comprend un matériau composite, le matériau composite comprenant un matériau de renforcement intégré dans un matériau de matrice polymère.

4. Système selon la revendication 1, dans lequel :
- la poutre de support (110) comprend une armature (111) et/ou comprend un matériau métallique et est sensiblement rigide ; et/ou
- la première partie de base (142) et la première partie de colonne montante (144) du premier ensemble cadre (140) sont solidaires ; et/ou
- la première partie de base (142) du premier ensemble cadre (140) est reliée de manière fixe à un sol sous-jacent (60), et facultativement, dans lequel la seconde partie de base (162) du second ensemble cadre (160) est reliée de manière fixe au sol sous-jacent (60) ; et/ou
- le premier ensemble cadre (140) est espacé d'une distance (D) du second ensemble cadre (160), et dans lequel la distance (D) est d'au moins environ 2 mètres ; et/ou
- le système (100) comprend en outre un crochet (113) relié à la poutre de support (110) et situé de sorte à suspendre la pièce (50) à la poutre de support (110).

5. Système selon la revendication 1, dans lequel la première partie de colonne montante (144) comprend une première glissière (150), et dans lequel le premier chariot (146) est en prise avec la première glissière (150) et peut se déplacer par rapport au premier axe vertical (V₁) et à la première partie de colonne montante (144) le long de la première glissière (150), et dans lequel le système (100) comprend de préférence en outre un moteur (172) conçu pour effectuer sélectivement un déplacement du premier chariot (146) par rapport au premier axe vertical (V₁) le long de la première glissière (150) ; et/ou
dans lequel la seconde partie de colonne montante (164) comprend une seconde glissière (170), et dans lequel le second chariot (166) est en prise avec la seconde glissière (170) et peut se déplacer par rapport au second axe vertical (V₂) et à la seconde partie de colonne montante (164) le long de la seconde glissière (170), et dans lequel le système (100) comprend de préférence un moteur (172) conçu pour effectuer sélectivement un déplacement du second chariot (166) par rapport au second axe vertical (V₂) le long de la seconde glissière (170).

6. Système selon la revendication 1, dans lequel :
- le premier élément d'indexation côté poutre (120) comprend un premier élément d'indexation mâle (121), et
- le premier élément d'indexation côté cadre (148) comprend un premier élément d'indexation femelle (149) dimensionné et formé pour recevoir étroitement le premier élément d'indexation mâle (121) ; et de préférence, dans lequel le premier élément d'indexation mâle (121) comprend un premier élément sphérique (123) et le premier élément d'indexation femelle (149) comprend un premier élément de douille (151) ; et
- facultativement, le second élément d'indexation côté poutre (130) comprend un second élément d'indexation mâle (131), et le second élément d'indexation côté cadre (168) comprend un second élément d'indexation femelle (171) dimensionné et formé pour recevoir étroitement le second élément d'indexation mâle (1310), et de préférence, dans lequel le second élément d'indexation mâle (131) comprend un second élément sphérique (133) et le second élément d'indexation femelle (171) comprend un second élément de douille (173).

7. Système selon la revendication 1 comprenant en outre un premier capteur (180) positionné de sorte à détecter une mise en prise entre le premier élément d'indexation côté poutre (120) et le premier élément d'indexation côté cadre (148), dans lequel le premier capteur (180) comprend de préférence un capteur de force (182), et facultativement, comprenant en outre un second capteur (190) positionné de sorte à détecter une mise en prise entre le second élément d'indexation côté poutre (130) et le second élément d'indexation côté cadre (168), dans lequel le second capteur (190) comprend de préférence un capteur de force (182).

8. Système (100) selon la revendication 1, dans lequel le portique (200) est conçu pour déplacer la poutre de support (110) dans deux directions uniquement, les deux directions définissant un plan (P) qui est généralement perpendiculaire au premier axe vertical (V₁) et/ou dans lequel la poutre de support (110) comprend un élément d'accouplement (202) positionnée de sorte à faciliter l'interface de la poutre de support (110) avec le portique (200).

9. Système (100) de support d'une pièce (50) dans un environnement de fabrication (10) selon la revendication 1, l'environnement de fabrication (10) comprenant une pluralité de cellules de travail (300), le système (100) comprenant en outre :
- le premier ensemble cadre (140) situé à l'intérieur d'une cellule de travail (12, 14, 16, 18, 20, ...n) de la pluralité de cellules de travail (30) ; et
- le second ensemble cadre situé à l'intérieur de la cellule de travail (12, 14, 16, 18, 20, ...n) de la pluralité de cellules de travail (30) ; et
de préférence, comprenant en outre :
- un premier capteur (180) positionné de sorte à détecter une mise en prise entre le premier élément d'indexation mâle (121) et le premier élément d'indexation femelle (149) ; et
- un second capteur (190) positionné de sorte à détecter une mise en prise entre le second élément d'indexation mâle (131) et le second élément d'indexation femelle (171).

10. Procédé (1000) de support d'une pièce (50) dans un environnement de fabrication (10), le procédé (1000) comprenant :
- la connexion (1010) de la pièce (50) à une poutre de support (110) ;
- l'engagement (1020) de la poutre de support (110) avec un premier ensemble cadre (140) ; et
- la mise en prise (1030) de la poutre de support (110) avec un second ensemble cadre (160),
dans lequel la mise en prise (1020) de la poutre de support (110) avec le premier ensemble cadre (140) et la mise en prise (1030) de la poutre de support (110) avec le second ensemble cadre (160) comprennent l'indexation de la poutre de support (110) avec le premier ensemble cadre (140) et le second ensemble cadre (160) ; et
comprenant en outre le déplacement de la poutre de support (110) vers une position à proximité du premier ensemble cadre (140) et du second ensemble cadre (160) avant la mise en prise (1020) de la poutre de support (110) avec le premier ensemble cadre (140) et la mise en prise (1030) de la poutre de support (110) avec le second ensemble cadre (160), et
dans lequel le déplacement de la poutre de support (110) comprend le déplacement (1005) de la poutre de support (110) avec un portique (200) ; et
de préférence, dans lequel la mise en prise (1020) de la poutre de support (110) avec le premier ensemble cadre (140) et la mise en prise (1030) de la poutre de support (110) avec le second ensemble cadre (1600) sont effectués simultanément.

11. Procédé selon la revendication 10,
dans lequel le déplacement (1005) de la poutre de support (110) comprend le déplacement de la poutre de support (110) dans deux directions uniquement, les deux directions définissant un plan (P) qui est généralement perpendiculaire à un premier axe vertical (V₁) défini par le premier ensemble cadre (140).

12. Procédé selon la revendication 10, dans lequel la poutre de support (110) est allongée le long d'un axe longitudinal (L) et comprend une première partie d'extrémité (112) et une seconde partie d'extrémité (114) opposées longitudinalement à la première partie d'extrémité (112).

13. Procédé selon la revendication 12, dans lequel la poutre de support (110) comprend un premier élément d'indexation côté poutre (121) à proximité de la première partie d'extrémité (112) et un second élément d'indexation côté poutre (131) à proximité de la seconde partie d'extrémité (114).

14. Procédé selon la revendication 13, dans lequel le premier ensemble cadre (140) comprend une première partie de base (142), une première partie de colonne montante (144) définissant un premier axe vertical (V₁), et un premier chariot (146) comprenant un premier élément d'indexation côté cadre (148), le premier chariot (146) étant relié à la première partie de colonne montante (144) et pouvant se déplacer par rapport à la première partie de colonne montante (144) le long du premier axe vertical (V₁) ; et facultativement, dans lequel la mise en prise (1020) de la poutre de support (110) avec le premier ensemble cadre (140) comprend le déplacement du premier chariot (146) par rapport à la première partie de colonne montante (144) de sorte que la premier élément d'indexation côté cadre (148) vient en prise avec la premier élément d'indexation côté poutre (121) de la poutre de support (110), et facultativement, comprenant en outre la détection (1025) lorsque le premier élément d'indexation côté cadre (148) vient en prise avec le premier élément d'indexation côté poutre (121).

15. Procédé selon la revendication 13, dans lequel le second ensemble cadre (160) comprend une seconde partie de base (162), une seconde partie de colonne montante (164) définissant un second axe vertical (V₂), et un second chariot (166) comprenant un second élément d'indexation côté cadre (168), le second chariot (166) étant relié à la seconde partie de colonne montante (164) et pouvant se déplacer par rapport à la seconde partie de colonne montante (164) le long du second axe vertical (V₂), et facultativement, dans lequel la mise en prise de la poutre de support (110) avec le second ensemble cadre (160) comprend le déplacement du second chariot (166) par rapport à la seconde partie de colonne montante (164) de sorte que le second élément d'indexation côté cadre (168) vient en prise avec le second élément d'indexation côté poutre (131) de la poutre de support (110), et/ou facultativement, comprenant en outre la détection (1035) lorsque le second élément d'indexation côté cadre (168) vient en prise avec le second élément d'indexation côté poutre (131).
